# EUROPÄISCHE PATENTSCHRIFT

(11) **EP 0 578 230 B1**
(45) Veröffentlichungstag und Bekanntmachung des Hinweises auf die Patenterteilung: **05.03.1997**
(21) Anmeldenummer: 93110882.3
(22) Anmeldetag: 07.07.1993
(51) Int. Cl.: E04F 13/14, E04F 13/08, F16B 5/02

(54) **Grossformatige keramische Platte zur Aufnahme von metallischen Befestigungsmitteln**
Large-size ceramic slab to receive metallic fastening means
Dalle céramique de grand format pour recevoir des moyens de fixation métalliques

(30) Priorität: 10.07.1992 DE 4222796
(43) Veröffentlichungstag der Anmeldung: 12.01.1994
(73) Patentinhaber: BUCHTAL GmbH, D-92521 Schwarzenfeld (DE)
(72) Erfinder: Baumgart, Hans Georg, D-92521 Schwarzenfeld (DE)
(74) Vertreter: Herrmann-Trentepohl, Werner, Dipl.-Ing.

(56) Entgegenhaltungen:
- EP-A- 0 221 262
- DE-U- 8 716 520
- GB-A- 2 040 415

## Beschreibung

Die Erfindung betrifft eine großformatige keramische Platte gemäß dem Oberbegriff von Anspruch 1. Siehe dazu DE-U-8716520.

Die Befestigung von keramischen Platten zur Verkleidung von Fassaden oder dgl. erfolgt zumeist mit Hilfe von den Rand übergreifenden klammerartigen Elementen. Die Randstützung ermöglicht aber nur relativ geringe Formatgrößen, z.B. kleiner als 60 x 60 cm, da der Lastabtrag nur über die statisch ungünstig liegenden Befestigungsstellen am Rand erfolgen kann. Es ergeben sich bei der Klammerhalterung durch den punktweisen Lasteintrag sehr hohe Spannungsspitzen, was zu einer erhöhten Bruchanfälligkeit der Fassadenplatten führt.

Die reine Mörtelbefestigung solcher Platten ist praktisch zwar anwendbar, es können aber damit keine hinterlüfteten und/oder wärmegedämmten Fassadenverkleidungen erstellt werden. Auch ist eine Auswechselbarkeit allenfalls beschädigter Platten nur mit großem Aufwand möglich.

Mit den bekannten Befestigungsmethoden können somit keine großformatigen Platten eingesetzt werden, bei deren Verwendung man an sich zu einer schöneren und zweckmäßigeren Fassaden- oder Verkleidungsgestaltung kommen kann, selbst wenn die von der Anmelderin hergestellten relativ dünnen großformatigen keramischen Platten zum Einsatz kommen, die bei einer Dicke von 8 mm Größenabmessungen bis zu 125 x 180 cm und darüber aufweisen und doch wegen der geringen Dicke vergleichsweise leicht sind.

Abhilfe wurde hier geschaffen durch Anwendung der in der Europäischen Patentschrift 0 221 262 erteilten Lehre, die auf die Anmelderin zurückgeht. Sie besteht in der Anordnung der Halterungselemente an nach statischen Gesichtspunkten bestimmten Ansatzstellen auf der Rückseite der Platten mit Hilfe einer keramischen Glasur, deren Wärmeausdehnungskoeffizient wenigstens annähernd gleich demjenigen der keramischen Platte ist, wobei die Halterungselemente, der Aufnahme metallischer Befestigungsmittel dienen und selbst keramisch ausgebildet sind. Diese technisch ausgereifte Lösung hat sich in der Praxis bewährt. Der notwendige Material- und Arbeitskostenaufwand erscheint jedoch vergleichsweise hoch und verhindert ggf. aus Kostengründen die Anwendung wünschbarer Großformatigkeit in Bereichen, in denen die Randlagerung nicht angewendet werden kann.

Eine weitere Lösung hat inzwischen Einführung gefunden in Form der Anwendung von handelsüblichen Spreizdübelsystemen (z.B. Fischer-Zykon-Plattenanker FZP), die jedoch eine Mindestwandstärke des keramischen Plattenmaterials von ca. 12 mm erfordern und damit um rund 1/3 gewichtsmäßig schwerer ausgeführt werden müssen als es bei Anwendung leichterer und damit kostengünstigerer, weil bei großformatiger Verlegeweise leichter handhabbarer Fassadenelemente es wünschbar wäre.

Außerdem stellt diese Gewichtsvermehrung erhöhte Ansprüche an die Ausbildung des Befestigungselements. Dieses Wandstärkenerfordernis beruht auf der notwendigen Anordnung einer in der Keramik angeordneten Hinterschnittbohrung zur Aufnahme des vorgesehenen metallischen Befestigungsmittels, wie Spreizdübel oder ähnliches, das eine bestimmte Eindringtiefe aufweisen muß. Andererseits ist ein bestimmter Mindestabstand von Plattensichtseite zur Bohrlochwandung erforderlich, da sonst eine mechanische Beschädigung der Plattenoberfläche unvermeidbar ist. Bei dieser Lösung kommt noch hinzu, daß spröde Werkstoffe, wie es keramische Werkstoffe sind, sich anfällig gegen Zug- oder Biegebeanspruchungen erweisen. Durch die Art des Lasteintrages in punktförmiger Art und Weise kommt es im Verbund mit den vorgenannten Eigenschaften zu Materialausbrüchen in der Keramik, deren Häufigkeit und Wahrscheinlichkeit mit abnehmender Wandstärke der Keramik und zunehmender Flächengröße wächst.

Aufgabe der Erfindung ist es, eine großformatige keramische Platte zu schaffen, die bei vergleichsweise leichtgewichtigem Aufbau robust gegenüber den bei Fassadenplatten auftretenden Belastungen, wie dynamischen Windsogkräften und dgl. ist, und insbesondere eine erhöhte Festigkeit im Bereich der mechanischen Befestigungsmittel aufweist.

Diese Aufgabe und die Behebung der beim Stand der Technik noch vorhandenen Nachteile wird erfindungsgemäß durch die im kennzeichnenden Teil des Anspruches 1 enthaltenen Merkmale gelöst, wobei zweckmäßig Weiterbildungen durch die in den Unteransprüchen enthaltenen Merkmale gekennzeichnet sind.

Die erfindungsgemäßen Verstärkungselemente sind mehrschichtig ausgebildet und bestehen vorzugsweise aus einem dreischichtigen Aufbau, nämlich einer keramischen Kernschicht von bevorzugt 8 mm Wandstärke und je einer an ihrer Ober- und Unterseite angeordneten Schicht zugfester Laminate, bestehend aus einer Glasfasermatte und thermisch gehärteten Kunstharzen.

Hierbei weist das verwendete Verstärkungselement annähernd den gleichen Wärmeausdehnungskoeffizienten auf, wie die keramische Platte selbst. Das Verstärkungselement wird so gewählt, daß es ein n-faches der flächenmäßigen Erstreckung des denkbaren Ausbruchquerschnittes der keramischen Platte im Bereich der Hinterschnittbohrung beträgt. Das n-fache bemißt sich dabei nach der gewählten Eindringtiefe der Hinterschnittbohrung in die Keramik und der materialspezifischen Bruchwinkelausbildung der keramischen Platte. Die Hinterschnittbohrung selbst durchdringt die gesamte Schichtstärke des Verstärkungselementes und dringt in die Keramikplatte ein, wobei ein Mindestabstand von 2 mm zur Sichtseite der Platte gewahrt bleibt.

Vor dem Einbringen der Hinterschnittbohrungen werden die Verstärkungselemente in gewählter Ausführung an den gewählten Ansatzpunkten mit Hilfe geeigneter Kleber, bevorzugt Epoxydharzkleber, dauerhaft mit der der Sichtseite abgewendeten Seite der keramischen Platte verbunden

Bei einer solchen Anordnung mit annähernd doppelter Schichtstärke des Plattenverbundes werden nicht doppelt so hohe sondern erstaunlicherweise um das 10 fache gesteigerte Auszugswerte erreicht. Die durch den erfindungsgemäßen Vorschlag erreichten Vorteile gegenüber vergleichbaren Lösungen bestehen in einer spürbaren Erhöhung der Ausbruchsfestigkeit zu vergleichsweise niedrigen Kosten, der Möglichkeit durch wandstärkenreduzierte keramische Materialien zu einer spürbaren Erniedrigung der Flächenlasten des keramischen Verkleidungsmaterials zu gelangen, einer spürbaren Verringerung der ins Material eingetragenen Spannungsspitzen, hervorgerufen durch dynamische Windsogkräfte, die in die vorgesehene mit Verstärkungselementen belegte Fläche verteilt werden.

Die zur Verfügung stehenden handelsüblichen Kleber, die zur Verbindung des Verstärkungselementes mit der keramischen Platte dienen, können wegen ihrer stofflichen Zusammensetzung ggf. altern oder im Brandfall zerstört werden und damit in ihrer Verbindungsfunktion beeinträchtigt werden. Dies hat jedoch keinen unmittelbaren Einfluß auf die technische Wirksamkeit des Verstärkungselementes, da der Formschluß zwischen Platte, Befestigungsmittel und Verstärkungslement mechanisch voll erhalten bleibt.

Nachfolgend wird ein bevorzugtes Ausführungsbeispiel anhand der Zeichnung beschrieben. Darin zeigen:
- Fig. 1: eine Schnittansicht durch einen Teil einer großformatigen formatigen keramischen Platte mit einem daran Verstärkungselement,
- Fig. 2: eine Draufsicht auf die Rückseite einer großformatigen keramischen Platte mit alternativen Ausführungsformen von Verstärkungselementen.

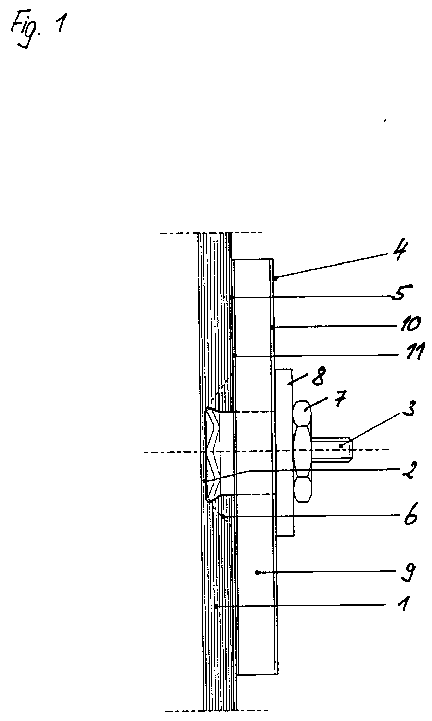

Fig. 1 zeigt einen Teil einer keramischen Platte 1 im Bereich einer Ausnehmung in Art einer Hinterschnittbohrung 2 zur Aufnahme eines mit 3 bezeichneten metallischen Befestigungsmittels. Es handelt sich hierbei um eine großformatige Platte, die von ihren Abmessungen her mindestens eine Grundfläche von 3600cm², etwa 60 x 60 cm und darüber aufweist. Die Ausnehmung 2 ist hierbei an der der Sichtseite der keramischen Platte 1 abgewandten Seite angeordnet. Der die Hinterschnittbohrung 2 umgebende Randbereich ist durch ein Verstärkungselement 4 abgedeckt, das mittels eines Klebers 5 dauerhaft mit der keramischen Platte verbunden ist. Dadurch ist die unmittelbare Umgebung der Hinterschnittbohrung 2 in Art eines Verbundelements bestehend aus keramischer Platte 1, Kleber 5 und Verstärkungselement 4 gebildet, was zu einer Versteifung der keramischen Platte im Bereich der Aufnahmen für die metallischen Befestigungsmittel führt.

In Fig. 1 ist mit 6 der mögliche Bruchwinkel in der Keramikplatte gestrichelt angedeutet. Die Größe des die unmittelbare Umgebung der Hinterschnittbohrung 2 überdeckenden Verstärkungselements 4 ist hierbei so bemessen, daß es ein n-faches der flächenmäßigen Erstreckung des möglichen Ausbruchquerschnittes der keramischen Platte im Bereich der Hinterschnittbohrung 2 beträgt. Zweckmäßigerweise beträgt n hierbei das 1- bis 6-fache des möglichen Ausbruchquerschnittes der keramischen Platte 1, wobei n sich nach der gewählten Eindringtiefe der Hinterschnittbohrung in die keramische Platte und der materialspezifischen Bruchwinkelausbildung der keramischen Platte bemißt. Die Hinterschnittbohrung 2 durchdringt hierbei die gesamte Schichtstärke des Verstärkungselements 4 und erstreckt sich in die keramische Platte 1 bis zu einem Mindestabstand von wenigstens 2 mm zur Sichtseite der Platte.

Im dargestellten Ausführungsbeispiel ist das metallische Befestigungsmittel 3 in Art eines Schraubbolzens ausgebildet, an dem eine Hülse angeordnet ist. Das metallische Befestigungsmittel mit Hülse ist hierbei von konventioneller Bauart. Im dargestellten Ausführungsbeispiel weist das metallische Befestigungsmittel eine Mutter 7 und eine Beilagscheibe 8 auf, wodurch das Verstärkungselement 4 kraftschlüssig mit der keramischen Platte 1 verbunden ist. Die Hülse ist einschlagbar oder auch einschraubbar und wirkt auf ein federartiges, in die Ausnehmung eingelegtes Element , das durch das Einschlagen der Hülse radial aufgespreizt oder aufgeweitet wird und sich form- und/oder kraftschlüssig in der Ausnehmung verspannt. Die Beilagscheibe ist im dargestellten Ausführungsbeispiel an die Hülse angeformt. Hierbei kann die keramische Platte werkseitig, mit den Verstärkungselementen 4 versehen, ausgeliefert und können die metallischen Befestigungsmittel vor Ort eingebracht werden oder es wird die keramische Platte mit den angeklebten Verstärkungselementen und den eingebrachten metallischen Befestigungsmitteln werkseitig hergestellt und ausgeliefert. Die Befestigungsmittel selbst sind so ausgebildet, daß sie sich in der Hinterschneidung ausweiten und damit ein fester Sitz des Befestigungsmittels in der keramischen Platte erzielt wird.

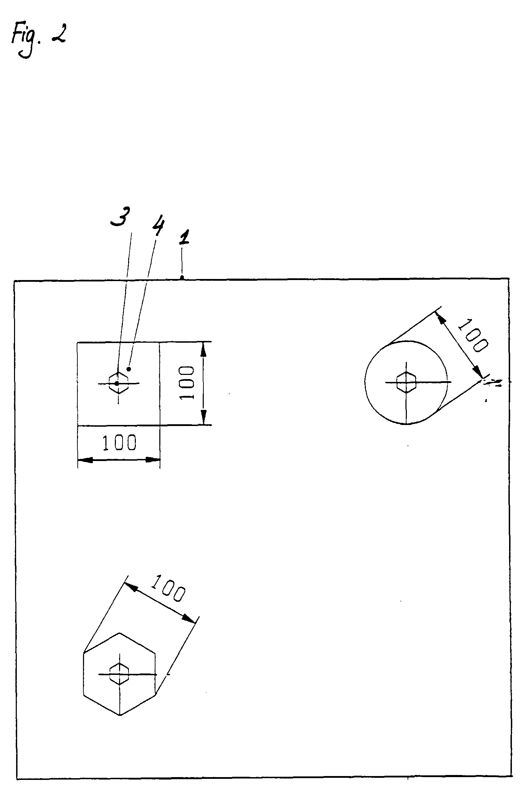

Die Verstärkungselemente 2 können nach statischen Gesichtspunkten auf der Rückseite der keramischen Platte 1 angebracht sein und weisen im dargestellten Beispiel eine Flächenerstreckung von etwa 100 x 100 mm auf. Der Grundriß der stärkungselemente 4 läßt jede denkbare Gestaltung zu, jedoch sind in Fig. 2 einige bevorzugte Grundrisse von Verstärkungselementen dargestellt, nämlich oben links ein Verstärkungselement in Art eines Quadrats, oben rechts ein kreisrundes Verstärkungselement und unten links ein sechseckiges Verstärkungselement.

Das Verstärkungselement 4 ist bevorzugt mehrschichtig aufgebaut und besteht im dargestellten Ausführungsbeispiel aus einer Kernschicht 9 und einer unteren Deckschicht 10 sowie einer oberen Deckschicht 11. Die Kernschicht 9 ist aus einer keramischen Lage oder Platte gebildet, deren Dicke 4 bis 10 mm - bevorzugt 8 mm - beträgt. Die untere und obere Deckschicht sind aus einem Laminat mit einer Dicke von 0,3 bis 1,5 mm - vorzugsweise etwa 0,5 mm - gebildet, welches inbesondere aus einer zugfest ausgebildeten Glasfasermatte besteht, die in thermisch gehärteten Kunstharzen eingebettet ist.

## Patentansprüche

1. Großformatige keramische Platte mit auf ihrer der Sichtseite abgewandten Seite vorgesehenen Ausnehmungen, insbesondere Hinterschnittbohrungen (2) zur Aufnahme von insbesondere metallischen Befestigungsmitteln (3), bei der der die Ausnehmung umgebene Randbereich einer jeden Ausnehmung durch ein Verstärkungselement (4) dauerhaft abgedeckt ist, welches auf der der keramischen Platte (1) zugewandten Seite flächig ausgebildet ist, **dadurch gekennzeichnet**, daß das Verstärkungselement annähernd den gleichen Wäremausdehnungskoeffizienten wie die keramische Platte aufweist, das Verstärkungselement eine keramische Kernschicht und eine Deckschicht aus einem zugfesten Laminat aufweist, und daß die flächenmäßige Erstreckung des Verstärkungselementes (4) ein n-faches der flächenmäßigen Erstreckung des möglichen Ausbruchquerschnittes der keramischen Platte im Bereich der Bohrung (2) beträgt, wobei n gleich 1 bis 6 ist!

2. Keramische Platte nach Anspruch 1, **dadurch gekennzeichnet**, daß die Ausnehmungen bzw. Hinterschnittbohrungen (2) an nach statischen Gesichtspunkten bestimmten Ansatzstellen der keramischen Platte (1) angeordnet sind.

3. Keramische Platte nach einem der vorhergehenden Ansprüche, **dadurch gekennzeichnet**, daß die Verstärkungselemente (4) mit der keramischen Platte durch einen klebe- und kraftschlüssigen Verbund befestigt sind.

4. Keramische Platte nach einem der vorhergehenden Ansprüche, **dadurch gekennzeichnet**, daß Kern- und Deckschicht des mehrschichtig aufgebauten Verstärkungselementes (4) dauerhaft miteinander verbunden sind.

5. Keramische Platte nach Anspruch 4, **dadurch gekennzeichnet**, daß die Kernschicht eine untere (10) und eine obere (11) Deckschicht (2) aufweist.

6. Keramische Platte nach einem der vorhergehenden Ansprüche, **dadurch gekennzeichnet**, daß die Kernschicht (9) aus keramischem Material gebildet ist und eine Dicke von 4 bis 11 mm - bevorzugt 8 mm - aufweist.

7. Keramische Platte nach einem der vorhergehenden Ansprüche, **dadurch gekennzeichnet**, daß die Deckschicht (10, 11) aus einem Kunststofflaminat - vorzugsweise aus einer in thermisch gehärtetem Kunstharz eingebetteten, zugfesten Glasfasermatte, gebildet sind, und daß die Wandstärke einer jeden Deckschicht 0,3 bis 1,5 mm - vorzugsweise 0,5 mm - beträgt.

8. Keramische Platte nach Anspruch 1, **dadurch gekennzeichnet**, daß n nach der gewählten Eindringtiefe der Bohrung (2) und der materialspezifischen Bruchwinkelausbildung der keramischen Platte (1) zu messen ist.

9. Keramische Platte nach einem der vorhergehenden Ansprüche, **dadurch gekennzeichnet**, daß die Hinterschnittbohrung (2) das Verstärkungselement in seiner gesamten Schichtstärke durchdringt und bis auf einen Abstand von mindestens 2 mm bis zur Sichtseite der keramischen Platte (1) in diese eindringt.

## Claims

1. Large-size ceramic panel with recesses provided on its side directed away from the visible side, particularly undercut bores (2), for receiving, particularly metallic, fasteners (3), in which the edge region, surrounding the recess, of each recess is permanently covered by a reinforcing element (4) which is flat on the side directed towards the ceramic panel (1), characterised in that the reinforcing element has approximately the same coefficient of thermal expansion as the ceramic panel, the reinforcing element has a ceramic core layer and a cover layer of a high tensile laminate and that the area of the reinforcing element (4) is n times the area of the possible breakout profile of the ceramic plate in the region of the bore (2), n being equal to 1 to 6.

2. Ceramic panel as claimed in claim 1, characterised in that the recesses or undercut bores (2) are arranged at attachment points on the ceramic panel (1) which are determined in accordance with static considerations.

3. Ceramic panel as claimed in one of the preceding claims, characterised in that the reinforcing elements (4) are secured to the ceramic plate by an adhesive- and force-locking bond.

4. Ceramic panel as claimed in one of the preceding claims, characterised in that the core and cover layer of the multiple layer reinforcing element (4) are permanently connected together.

5. Ceramic panel as claimed in claim 5, characterised in that the core layer has a lower (10) and an upper (11) cover layer (2).

6. Ceramic panel as claimed in one of the preceding claims, characterised in that the core layer (9) is constituted by ceramic material and has a thickness of 4 to 11mm - preferably 8mm.

7. Ceramic panel as claimed in one of the preceding claims, characterised in that the cover layers (10,11) are constituted by a plastic laminate - preferably comprising a high tensile glass fibre mat embedded in thermally cured synthetic resin and that the wall thickness of each cover layer is 0.3 to 1.5mm - preferably 0.5mm.

8. Ceramic panel as claimed in claim 10, characterised in that n is to be dimensioned in accordance with the selected penetration depth of the bore (2) and the material-specific fracture angle formation of the ceramic panel (1).

9. Ceramic panel as claimed in one of the preceding claims, characterised in that the undercut bore (2) passes through the entire layer thickness of the reinforcing element and penetrates into the ceramic panel (1) to a distance of at least 2mm from the visible side.

## Revendications

1. Dalle de céramique de grand format comportant des évidements ménagés sur le côté détourné par rapport au côté visible, notamment des alésages de contre-dépouille (2) pour recevoir en particulier des moyens de fixation métalliques (3), dalle dans laquelle la zone marginale entourant l'évidement de chaque évidement est recouverte en permanence d'un élément de renforcement (4) qui est conçu solidairement avec le côté dirigé vers la plaque céramique (1), caractérisée en ce que l'élément de renforcement présente approximativement les mêmes coefficients de dilatation thermique que la dalle céramique, l'élément de renforcement présentant une couche centrale céramique et une couche de revêtement en aggloméré stratifié résistant à la traction, et en ce que l'extension plane de l'élément de renforcement (4) est un multiple n de l'extension plane de la section transversale de rupture possible de la dalle céramique au niveau de l'alésage (2), n étant égal à 1 jusqu'à 6.

2. Dalle céramique selon la revendication 1, caractérisée en ce que les évidements ou alésages de contre-dépouille (2) sont ménagés sur la dalle céramique (1) en des emplacements déterminés par des considérations statiques.

3. Dalle céramique selon l'une des revendication précédente, caractérisée en ce que les éléments de renforcement (4) sont fixés à la dalle céramique au moyen d'une liaison par adhérence ou au moyen de colle.

4. Dalle céramique selon l'une des revendications précédentes, caractérisée en ce que la couche centrale et la couche de revêtement de l'élément de renforcement multicouche (4) sont reliées entre elles de façon permanente.

5. Dalle céramique selon la revendication 4, caractérisée en ce que la couche centrale présente une couche de revêtement (2) inférieure (10) et supérieure (11).

6. Dalle céramique selon l'une des revendications précédentes, caractérisée en ce que la couche centrale (9) est formée à partir d'un matériau céramique et présente une épaisseur de 4 à 11 mm, de préférence 8 mm.

7. Dalle céramique selon l'une des revendications précédentes, caractérisée en ce que la couche de revêtement (10, 11) est réalisée à partir d'un stratifié de matières synthétiques - de préférence à partir d'une nappe de fibres de verre résistant à la traction, incorporée dans une résine synthétique durcie thermiquement, et en ce que l'épaisseur de paroi de chaque couche de revêtement est de 0,3 à 1, 5 mm de préférence 0,5 mm.

8. Dalle céramique selon la revendication 10, caractérisée en ce que n devra être mesuré selon la profondeur de pénétration choisie de l'alésage (2) et de la formation de l'angle de rupture spécifique au matériau de la dalle céramique (1).

9. Dalle céramique selon l'une des revendications précédentes, caractérisée en ce que l'alésage de contre-dépouille (2) traverse l'élément de renforcement dans toute son épaisseur de couche et pénètre jusqu'à une distance d'au moins 2 mm sur le côté visible de la dalle céramique (1).
